(19) **Europäisches Patentamt / European Patent Office / Office européen des brevets**

(11) **EP 3 585 836 B1**

(12) **FASCICULE DE BREVET EUROPEEN**

(45) Date de publication et mention
de la délivrance du brevet:
**06.04.2022 Bulletin 2022/14**

(21) Numéro de dépôt: **18706827.5**

(22) Date de dépôt: **15.02.2018**

(51) Classification Internationale des Brevets (IPC):
**C08L 33/14** (2006.01)    **C08L 33/26** (2006.01)

(52) Classification Coopérative des Brevets (CPC):
(C-Sets disponibles)
**C08L 33/14; C08L 33/26**         (Cont.)

(86) Numéro de dépôt international:
**PCT/FR2018/050361**

(87) Numéro de publication internationale:
**WO 2018/154219 (30.08.2018 Gazette 2018/35)**

(54) **SUSPENSION POLYPHASIQUE DE POLYMÈRE ET SON UTILISATION**

POLYPHASIGE POLYMERSUSPENSION UND IHRE VERWENDUNG

POLYPHASIC POLYMER SUSPENSION AND ITS USE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.02.2017 FR 1751501**

(43) Date de publication de la demande:
**01.01.2020 Bulletin 2020/01**

(73) Titulaire: **SPCM SA**
**42160 Andrézieux-Bouthéon (FR)**

(72) Inventeurs:
• **FAVERO, Cédrick**
  **42160 Andrézieux Bouthéon (FR)**
• **OMONT, Alexandre**
  **42160 Andrézieux Bouthéon (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A1-2009/047480    WO-A2-2011/100665**
**US-A1- 2016 298 023**

(52) Classification Coopérative des Brevets (CPC):
(Cont.)

C-Sets
**C08L 33/14;**
**C08L 33/26**

(52) Classification Coopérative des Brevets (CPC):
(Cont.)

C-Sets

**Description**

La présente invention concerne une suspension polyphasique particulaire et son utilisation dans les domaines techniques de la récupération assistée du pétrole dans un gisement, de la fracturation hydraulique, du traitement d'effluents miniers et des opérations de forage dans le génie civil comme dans les opérations pétrolières et gazières.

La plupart des champs de pétrole actuellement exploités sont devenus matures et ont, de fait, amorcé le déclin de leur production ou sont sur le point de le faire. Le taux de récupération de ces champs est actuellement de l'ordre de 15 à 35 % en moyenne par rapport à la quantité initiale de pétrole. Ils offrent donc un potentiel de production encore considérable.

De manière générale, la récupération du pétrole brut contenu dans les gisements s'effectue en plusieurs temps.

La production résulte d'abord de l'énergie naturelle des fluides et de la roche qui se décompriment. A l'issue de cette phase de déplétion, la quantité d'huile récupérée en surface représente en moyenne quelques 5 à 15 % de la réserve initiale. Il est donc nécessaire, dans un deuxième temps, d'employer des techniques visant à accroître le rendement de récupération en maintenant la pression du champ.

La méthode la plus fréquemment mise en œuvre consiste à injecter de l'eau dans le gisement par le biais de puits injecteurs dédiés à cette fin. On parle alors de récupération secondaire. Cette deuxième phase s'arrête lorsque le rapport eau/huile est trop important, c'est-à-dire lorsque la quantité en eau dans le mélange produit par les puits producteurs est trop importante. Cette récupération secondaire permet ainsi d'obtenir un taux de récupération additionnel de l'ordre de 10 à 20 %.

Les autres techniques utilisables sont regroupées sous le nom de récupération assistée du pétrole (RAP ou EOR acronyme anglais de « Enhanced Oil Recovery »). Leur but est de récupérer entre 10 et 35 % d'huile additionnelle par rapport à la quantité initiale d'huile. Sous le terme de récupération assistée du pétrole, sont connues diverses techniques thermiques, ou non, telles que les techniques dites électrique, miscible, vapeur, ou encore chimique de récupération améliorée du pétrole restant en place (voir « Oil & gas science and technology » - revue TFP, vol 63 (2008) n°1, pp 9-19). Par pétrole, on désigne tout type d'huile, à savoir huile légère comme huile lourde, voire bitumineuse.

La présente invention concerne plus précisément la récupération assistée du pétrole par voie chimique impliquant l'injection continue d'une composition fluide, autrement appelée fluide d'injection, contenant au moins un polymère hydrosoluble, ladite composition étant apte à pousser le pétrole en dehors de la roche.

Par « pétrole », on désigne tout type d'huile, à savoir huile légère comme huile lourde, voire bitumineuse. Une huile résulte généralement de la transformation naturelle de matière organique et est composée d'un mélange d'hydrocarbures. Dans la description de l'art antérieur ou de l'invention, les termes pétrole et huile sont utilisés pour désigner la même matière, à l'exception de la mention de la composition d'une émulsion.

L'efficacité du balayage par injection d'eau est généralement améliorée par l'addition de polymères hydrosolubles. Les bénéfices attendus et prouvés de l'utilisation de polymères, au travers de la « viscosification » des eaux injectées, sont l'amélioration du balayage et la réduction du contraste de viscosité entre les fluides pour maîtriser leur ratio de mobilité dans le champ, et ce afin de récupérer l'huile rapidement et efficacement. Ces polymères augmentent la viscosité de l'eau.

Il est connu de l'homme du métier que les polymères hydrosolubles synthétiques, en particulier les polymères à base d'acrylamide, sont des polymères très avantageux pour augmenter la viscosité des solutions aqueuses et sont de fait, majoritairement utilisés en récupération assistée du pétrole.

Généralement, le fluide d'injection est sous la forme d'une solution dans laquelle le polymère hydrosoluble viscosifiant est complètement dissous. Il existe plusieurs formes de polymères hydrosolubles : poudre, solution, émulsion.

La forme poudre est la plus utilisée. La poudre est dissoute dans de l'eau ou dans une saumure, avant d'être injectée dans le gisement. Cette étape indispensable nécessite des équipements supplémentaires, et un long temps de préparation. La poudre est traditionnellement préférée de par son coût, sa stabilité, et lorsque le projet considéré n'a pas de contraintes majeures de place au sol, de poids en charge, ou de transfert de produits sur de grandes distances.

La forme solution contient le polymère dissout dans de l'eau. Elle est très peu utilisée car elle ne peut pas contenir une grande quantité de polymère à cause de la trop grande viscosité procurée par le polymère. Généralement la concentration maximale en polymère est d'environ 2 à 5 % en poids, mais ne dépasse jamais 5 %.

Dans la forme émulsion, plus précisément émulsion inverse (eau dans huile), le polymère se trouve dans des gouttelettes micrométriques hydrophiles émulsionnées avec l'aide de tensioactifs dans une phase continue huileuse. Généralement, les émulsions inverses contiennent entre 20 et 60 % en poids de polymère. Elles sont particulièrement utilisées dans les projets en mer, sur plateforme offshore car elles ne nécessitent pas de matériels lourds pour, le cas échéant, inverser les émulsions et préparer le fluide d'injection. Elles permettent ainsi de limiter l'emprise au sol, le poids, et peuvent être transférées par pompage sur de longues distances.

Le document WO 2009/047480 décrit un fluide pouvant comprendre de l'eau de mer, un polymère de type hydroxyéthylcellulose, du polypropylène glycol, du sel NaCl et de la mélamine (1,3,5-triazine-2,4,6-triamine). Ce fluide comprend 0,75% en poids, ou moins, de polymère de type hydroxyéthylcellulose.

Le document WO 2016/051777 décrit des compositions utilisées dans le domaine de la fracturation hydraulique. Ces compositions ne comprennent pas plus de 0,1% en poids de polymère et pas plus de 5% en poids de sel.

Le document WO 2011/100665 décrit une composition épaississante et son utilisation, par exemple dans le domaine de la récupération du pétrole. Cette composition ne comprend pas plus de 3% en poids de polymère hydrosoluble et pas plus de 2% en poids de sel.

Le document US2005/0239957 décrit un exemple de production d'émulsion inverse et suggère leur utilisation dans la récupération assistée du pétrole.

Le document WO2014/075964 aborde également le problème de stabilité à long terme de ces émulsions inverses, en particulier dans des conditions de stockage sur les plateformes offshores. Pour résoudre le problème, il est proposé d'utiliser une autre forme de polymère : « Liquid Dispersion Polymer » (LPD), obtenue en enlevant une grande partie de l'eau d'une émulsion inverse. La proportion de polymère de ces « LDP » est ainsi de 50 % en poids environ, et la présence d'eau est limitée à moins de 5 % en poids, le reste étant généralement des tensioactifs et des solvants organiques constituant la phase huile de l'émulsion. Un autre document pertinent est US- A-2017/218259.

Cependant, qu'ils s'agissent des émulsions inverses ou des « Liquid Dispersion Polymer », elles contiennent une phase huile qui se retrouve sous forme de gouttelettes dans le fluide d'injection. Or, ces gouttelettes d'huile dans le fluide d'injection aqueux, créent des problèmes de propagation dans la formation sous-terraine et engendrent un écoulement multiphasique beaucoup plus complexe à maîtriser.

Les documents SPE 4369 « Oil-in-Water Emulsions and Their Flow Properties in Porous Media », et SPE 5859 « Flow of oil-in Water Emulsions Through Tubes and Porous Media » expliquent bien pourquoi et comment les gouttelettes d'huiles résultant des émulsions inverses ou des LDP affectent négativement la perméabilité des formations sous-terraines.

Au-delà de ces formes traditionnelles, il existe une nouvelle forme liquide contenant le polymère sous forme de poudre. Le document WO2016069937 décrit une composition polymérique comprenant un polymère sous forme de poudre suspendu dans un solvant de HLB supérieur à 8. Cette dispersion est anhydre et contient préférentiellement des surfactants.

Cependant, la présence de solvants dans ces compositions pose un problème de sécurité lors de leur transport, et lors de leur manipulation pour préparer le fluide d'injection. De plus, la présence de ces solvants et surtout de surfactants peut poser des problèmes de compatibilité avec certains ingrédients du fluide d'injection aqueux, ainsi que des problèmes de propagation dans la formation sous-terraine. En particulier, le solvant et les tensioactifs peuvent interagir et former des goutelettes qui engendrent des écoulements polyphasiques complexes, comme dans le cas de l'utilisation d'émulsions inverses.

L'industrie pétrolière est à la recherche de produits et de procédés de récupération assistée du pétrole plus simples en utilisant un équipement minimum, plus sécuritaires en utilisant des produits compatibles, moins dangereux et faciles à transférer d'un lieu de stockage à un autre, le tout en minimisant le temps de préparation des polymères, la surface occupée, le poids total des installations, et n'engendrant pas de problèmes de propagation dans le réservoir.

La Demanderesse a découvert qu'il est possible de formuler un polymère sous forme de poudre pour former un liquide sous la forme d'une suspension polyphasique particulaire, ayant une concentration en poids en polymère supérieure à 20 %, sans problème de viscosité excessive, présentant une bonne stabilité, et utilisable sans nécessiter d'équipements spécifiques de mise en solution.

Par « suspension polyphasique », on entend une suspension contenant au moins deux phases distinctes, en l'occurrence, au moins une phase aqueuse et une phase solide.

La présente invention concerne donc une suspension polyphasique particulaire aqueuse comprenant :

- 15 à 60 % en poids d'au moins un polymère hydrosoluble sous forme de particule solide de taille moyenne comprise entre 5 et 500 $\mu$m ;
- 15 à 45 % en poids d'au moins un sel de métal alcalin et/ou d'au moins un sel d'un métal alcalino-terreux ;
- au moins un agent viscosifiant différent du polymère hydrosoluble ;
- au moins 10 % en poids d'eau ; et

ladite suspension ayant une viscosité Brookfield comprise entre 500 et 20000 cps, et ladite suspension ayant une masse volumique comprise entre 1,1 et 2 kg/l.

La viscosité Brookfield est mesurée avec un appareil Brookfield modèle LVT, monté d'un module LV, le module pouvant tourner à une vitesse de 30 tours par minutes par exemple, la mesure étant avantageusement effectuée à 20°C. Il s'agit bien entendu de la mesure de la viscosité de la suspension polyphasique telle que définie selon l'invention.

L'homme du métier saura adapter non seulement le module (LV-1 à LV-4 par exemple) du viscosimètre Brookfield mais aussi la vitesse du module en fonction de la viscosité de la suspension polyphasique.

Dans la description, cette viscosité est appelée viscosité Brookfield.

La masse volumique est mesurée à 25°C, à une pression de 1 atm c'est-à-dire 101 325 Pa.

La présente invention concerne également un procédé de récupération assistée du pétrole comprenant les étapes suivantes :

- Préparer un fluide d'injection en mélangeant une suspension polyphasique particulaire aqueuse selon l'invention, avec de l'eau ou une saumure ;
- Injecter le fluide d'injection dans un réservoir c'est-à-dire dans une formation souterraine ;
- Récupérer le mélange aqueux et huileux et/ou gazeux, c'est-à-dire un mélange contenant de l'eau et des hydrocarbures.

De manière préférée, le fluide d'injection contient moins de sels que la suspension polyphasique particulaire.

De manière préférée, la suspension polyphasique particulaire ne contient substantiellement pas de solvant(s), et substantiellement pas de tensioactif(s). En effet, comme cela a été expliqué précédemment, leur présence engendre des écoulements multiphasiques beaucoup plus complexes à maîtriser. Bien entendu lorsque de faibles quantités (inférieure à 1 % en poids) de solvant sont présentes dans la suspension polyphasique particulaire, cela n'est pas forcément gênant. Cependant, et de manière préférentielle, la suspension polyphasique particulaire ne contient pas du tout de solvant.

De la même manière et de manière préférée, la suspension polyphasique particulaire ne contient substantiellement pas de tensioactif. Une présence de tensioactif inférieure à 0,5 % en poids, préférentiellement inférieure à 0,1 % en poids, ne posera pas nécessairement de problème. Cependant, et de manière préférentielle, la suspension polyphasique particulaire ne contient pas du tout de tensioactif.

Selon un mode de réalisation préféré, la suspension polyphasique particulaire comprend entre 15 et 60 % en poids de polymère hydrosoluble, préférentiellement entre 20 et 45 %, et plus préférentiellement entre 25 et 40 %. Comme déjà indiqué, le polymère hydrosoluble se présente sous la forme de particules solides dans la suspension polyphasique. Le polymère hydrosoluble n'est pas solubilisé dans la suspension polyphasique.

De par la haute masse volumique des suspensions selon l'invention, les suspensions contiennent entre 300 et 750 kg de polymère actif par $m^3$ de suspension, préférentiellement de 400 à 750 kg/$m^3$, plus préférentiellement de 500 à 750 kg/$m^3$. Cela apporte un avantage technique dans les procédés dans lesquels sont utilisées les suspensions selon l'invention, comme par exemple la moindre occupation du volume de stockage de polymère.

Selon un mode de réalisation préféré, la taille moyenne des particules de polymère hydrosoluble est comprise entre 10 $\mu$m et 400 $\mu$m, préférentiellement entre 50 $\mu$m et 200 $\mu$m. Les particules de polymère hydrosoluble peuvent avoir une forme régulière et sphérique, comme des billes, ou non régulière.

La taille moyenne des particules de polymère hydrosoluble est la taille moyenne de la dimension la plus importante, par exemple le diamètre pour des particules sphériques, mesurée avec un appareil de mesure laser utilisant les techniques conventionnelles qui font partie des connaissances de l'homme du métier. Un appareil de type Mastersizer de la société Malvern, par exemple le MS2000 pourra être utilisé à cet effet. Ce type d'appareil permet de mesurer, par diffraction laser, la distribution granulométrique des particules en milieu liquide ou sous forme solide, de préférence dans la suspension polyphasique.

Le polymère hydrosoluble peut être un polymère naturel, comme par exemple les gommes xanthane, les gommes guar ou d'autres composés de la famille des polysaccharides, ou un polymère synthétique ou semi-synthétique. De préférence le polymère hydrosoluble est un polymère synthétique.

Lorsque le polymère hydrosoluble est un polymère synthétique, il s'agit préférentiellement d'un polymère obtenu à partir d'au moins un monomère non ionique et/ou au moins un monomère anionique et/ou au moins un monomère cationique.

Le ou les monomères non ioniques pouvant être utilisés dans le cadre de l'invention peuvent être choisis, notamment, dans le groupe comprenant les monomères vinyliques solubles dans l'eau. Des monomères préférés appartenant à cette classe sont, par exemple, l'acrylamide, le méthacrylamide, le N-isopropylacrylamide, le N,N-diméthylacrylamide et le N-méthylolacrylamide. Egalement, peuvent être utilisés la N-vinylformamide, le N-vinyl acetamide, la N-vinylpyridine et la N-vinylpyrrolidone, l'acryloyl morpholine (ACMO) et la diacétone acrylamide. Un monomère non ionique préféré est l'acrylamide.

Le ou les monomères anioniques sont préférentiellement choisi parmi l'acide acrylique, l'acide méthacrylique, l'acide itaconique, l'acide maléique, l'acide 2-acrylamido-2-méthylpropane sulfonique (ATBS), l'acide vinylsulphonique, l'acide vinylphosphonique, ledit monomère anionique étant non salifié, partiellement ou totalement salifié, et les sels du méthacrylate de 3-sulfopropyle.

Le ou les monomères cationiques pouvant être utilisés dans le cadre de l'invention peuvent être choisis, notamment parmi les monomères du type acrylamide, acrylique, vinylique, allylique ou maléique possédant une fonction ammonium quaternaire. On peut citer, en particulier et de façon non limitative, l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), et le chlorure de methacrylamido propyltrimethyl ammonium (MAPTAC).

Selon certains modes de réalisation, en plus des monomères ci-dessus, le(s) copolymères hydrosolubles peuvent également comprendre un ou plusieurs monomères hydrophobes. Les documents WO2005100423 et WO201315003 exemplifient des monomères hydrophobes adéquats et avantageux.

Le polymère hydrosoluble est préférentiellement un polymère anionique à base d'acrylamide, préférentiellement un copolymère d'acrylamide et d'acrylamido tertio butyl sulfonique acide (ATBS) optionnellement partiellement post-hydrolysé, plus préférentiellement un terpolymère d'acrylamide, d'acide acrylique et d'acrylamido tertio butyl sulfonique acide (ATBS).

Le polymère hydrosoluble contient préférentiellement entre 10% et 50% molaire de monomère(s) anionique(s), plus préférentiellement entre 25% et 40% molaire.

Le polymère hydrosoluble contient préférentiellement entre 1% et 10% molaire d'ATBS.

De manière préférée, le polymère hydrosoluble contient uniquement des unités monomériques anioniques et non-ioniques. En d'autres termes, il est préférentiellement obtenu à partir d'au moins un type de monomère anionique et d'au moins un type de monomère non-ionique.

Le polymère hydrosoluble peut en outre être structuré par au moins un agent de structure, pouvant être choisi dans le groupe comprenant des monomères à insaturation polyéthylénique (ayant au minimum deux fonctions insaturées), comme par exemple les fonctions vinyliques, allyliques, acryliques et époxy et l'on peut citer par exemple le méthylène bis acrylamide (MBA), la triallylamine, ou encore par des macroamorceurs tels que les polyperoxydes, polyazoïques et les polyagents de transfert tels que les polymères polymercaptants.

Selon l'invention, le polymère hydrosoluble n'est pas réticulé. Il peut être linéaire ou structuré, c'est à dire branché, star (en forme d'étoile), associatif (contenant des groupes hydrophobes), thermosensible (avec des groupes avec une LCST), ou comb (en forme de peigne).

Selon les connaissances générales de l'homme du métier, un groupe à LCST correspond à un groupe dont la solubilité dans l'eau pour une concentration déterminée, est modifiée au-delà d'une certaine température et en fonction de la salinité. Il s'agit d'un groupe présentant une température de transition par chauffage définissant son manque d'affinité avec le milieu solvant. Le manque d'affinité avec le solvant se traduit par une opacification ou une perte de transparence qui peut être due à une précipitation, une agrégation, une gélification ou une viscosification du milieu. La température de transition minimale est appelée « LCST » (température critique inférieure de solubilité, de l'acronyme anglais « Lower Critical Solution Température »). Pour chaque concentration de groupe à LCST, une température de transition par chauffage est observée. Elle est supérieure à la LCST qui est le point minimum de la courbe. En dessous de cette température, le polymère est soluble dans l'eau, au-dessus de cette température, le polymère perd sa solubilité dans l'eau.

Par polymère structuré, on désigne un polymère non linéaire qui possède des chaînes latérales de manière à obtenir, lorsque ce polymère est mis en solution dans l'eau, un fort état d'enchevêtrement conduisant à des viscosités à bas gradient très importantes.

Les polymères selon l'invention ont pour fonctionnalité première de viscosifier les eaux injectées dans les réservoirs contenant du pétrole pour assurer un contrôle de mobilité sans qu'un recours à la réticulation, c'est à dire un pontage chimique inter chaines, ne soit nécessaire.

La viscosité est, pour une structure et une chimie identique, d'autant plus élevée que la taille de la chaîne polymérique est longue. Ceci est lié à des enchevêtrements physiques entre les chaines créant une résistance à la mobilité moléculaire, ce qui génère de la viscosité. Dans le cadre de la présente invention, il est donc avantageux d'utiliser des polymères de poids moléculaire élevé.

Par «poids moléculaire élevé », on désigne des poids moléculaires d'au moins 1 million de g/mol, préférentiellement entre 2 et 40 millions g/mol, plus préférentiellement entre 5 et 30 millions g/mol. Le poids moléculaire s'entend en poids moléculaire moyen en poids.

Selon l'invention, les polymères hydrosolubles utilisés ne nécessitent pas de développement de procédé de polymérisation particulier. Ils peuvent être obtenus par toutes les techniques de polymérisation bien connues de l'homme du métier résultant en un polymère sous forme de poudre : polymérisation en gel suivie d'étapes de séchage et broyage ; polymérisation par précipitation ; polymérisation en solution, suivie d'une étape de spray drying ; polymérisation en suspension inverse pour l'obtention de microbilles; polymérisation micellaire suivie ou non d'une étape de précipitation ; polymérisation post-hydrolyse ou co-hydrolyse ; polymérisation dite « template », radicalaire, ou encore radicalaire contrôlée, et plus particulièrement de type RAFT (Reversible Addition Fragmentation Chain Transfert).

De manière préférée, le mode d'obtention préféré est le procédé gel suivi d'un séchage et d'un broyage pour l'obtention de particules de polymère de taille moyenne désirée.

Selon un mode de réalisation préféré, la suspension polyphasique particulaire comprend entre 20 et 40 % en poids d'au moins un sel de métal alcalin et/ou d'au moins un sel d'un métal alcalino-terreux.

Bien qu'il soit possible d'obtenir des suspensions polyphasique particulaires satisfaisantes avec tout type de sels de métal alcalins et/ou alcalino-terreux, la nature du ou des sel(s), ainsi que le ratio de l'un par rapport à l'autre permet d'obtenir des suspensions polyphasique particulaires encore plus satisfaisantes, particulièrement en termes de performance de stabilité dans le temps de la suspension, de facilité de mise en œuvre de la suspension dans l'application et en termes d'injectivité.

De manière avantageuse, le sel de métal alcalin et/ou le sel de métal alcalino-terreux est un sel d'un halogénure.

De manière préférentielle, le sel de métal alcalino-terreux est le $CaCl_2$ ou le $CaBr_2$, ou un mélange des deux, et préférentiellement une combinaison des deux. De manière encore plus préférentielle, le ratio entre $CaCl_2$ et $CaBr_2$ est compris entre 10:1 et 1:2, préférentiellement entre 8:1 et 2:1. Ces modes de réalisation permettent d'obtenir de meilleures performances.

La suspension polyphasique particulaire selon l'invention comprend également au moins un agent viscosifiant différent du polymère hydrosoluble. Bien que de nombreux type d'agents viscosifiant soient adaptés pour formuler une suspension satisfaisante, la Demanderesse a constaté que les performances étaient améliorées lorsque l'agent viscosifiant était un dérivé de cellulose, et plus préférentiellement de l'hydroxy cellulose et un dérivé d'hydroxy cellulose, et encore plus préférentiellement de l'hydroxyéthyl cellulose.

Il est toutefois possible d'utiliser des silices et des bentonites, mais ces dernières peuvent impacter négativement l'injectivité.

La suspension polyphasique particulaire selon l'invention comprend préférentiellement entre 0,01 et 5 % en poids d'agent viscosifiant, plus préférentiellement entre 0,1 et 1 % en poids.

La suspension polyphasique particulaire selon l'invention a une masse volumique comprise entre 1,1 et 2, préférentiellement comprise entre 1,3 et 1,9 kg/l.

La suspension polyphasique particulaire selon l'invention comprend plus de 10 % en poids d'eau, préférentiellement plus de 15 %, encore plus préférentiellement plus de 20%.

L'homme du métier saura ajuster le pourcentage en poids de chacun des constituants de la suspension polyphasique particulaire de manière à ce que la somme des pourcentages soit égale à 100.

La suspension polyphasique particulaire a une viscosité comprise entre 500 cps et 20000 cps. De manière préférentielle, sa viscosité est comprise entre 1000 et 8000 cps.

La suspension polyphasique particulaire selon l'invention est préparée en mélangeant dans un premier temps de l'eau et le(s) sel(s), puis en ajoutant l'agent viscosifiant, et enfin les particules de polymère hydrosoluble. La préparation de la suspension est préférentiellement réalisée de telle sorte qu'avant d'ajouter les particules de polymère hydrosoluble, la masse volumique du liquide dans lequel les particules sont ajoutées et comprises entre 1,1 et 2 kg/l, préférentiellement entre 1,3 et 1,9 kg/l.

Dans un mode de réalisation particulièrement avantageux, la suspension polyphasique particulaire comprend :

- 15 à 60 % en poids d'au moins un copolymère hydrosoluble sous forme de particule solide de taille moyenne comprise entre 5 et 500 $\mu$m, ledit copolymère étant un copolymère posthydrolysé ou non d'acrylamide et d'acide acrylique, ou un copolymère posthydrolysé ou non d'acrylamide et d'ATBS, ou un terpolymère posthydrolysé ou non d'acrylamide, d'acide acrylique et d'ATBS, ledit polymère ayant un poids moléculaire compris entre 5 et 40 millions g/mol ;
- 15 à 45 % en poids d'un mélange de $CaCl_2$ et de $CaBr_2$ dans un ratio massique compris entre 10:1 et 1:2 ;
- 0,01 à 5 % en poids d'hydroxy cellulose,
- au moins 10 % en poids d'eau, et

ladite suspension ayant une viscosité Brookfield comprise entre 500 et 20000 cps, et ladite suspension ayant une masse volumique comprise entre 1,1 et 2 kg/l.

La présente invention concerne également un procédé de récupération assistée du pétrole comprenant les étapes suivantes :

- Préparer un fluide d'injection en mélangeant une suspension polyphasique particulaire aqueuse selon l'invention, avec de l'eau ou une saumure ;
- Injecter le fluide d'injection dans un réservoir ;
- Récupérer le mélange aqueux et huileux et/ou gazeux.

De manière préférée, le fluide d'injection contient moins de sels (pourcentage en poids inférieur) que la suspension polyphasique particulaire.

Un des grands avantages de la suspension de polymère et du procédé selon l'invention est de pouvoir préparer rapidement et facilement un fluide d'injection avec une forme concentrée en polymère hydrosoluble.

Ainsi, le procédé de récupération assistée du pétrole est plus simple car il n'utilise pas un équipement lourd pour mettre en œuvre la forme dans laquelle le polymère est livré sur les champs pétroliers. Il est plus rapide et permet de minimiser le temps de préparation des solutions de polymères, tout en n'engendrant pas de problèmes de propagation dans le réservoir. Il est enfin moins consommateur d'espace car les masses volumiques des suspensions sont élevées, et les suspensions contiennent entre 300 et 750 kg de polymère actif par $m^3$ de suspension, soit une grande quantité de polymère par volume de produit livré (la suspension).

Dans un mode de réalisation préféré, le mélange de la suspension avec l'eau ou la saumure est effectué pendant moins de 1 heure, préférentiellement pendant moins de 10 minutes.

Dans le cas où le transport du mélange ainsi obtenu est court, de l'ordre de quelques minutes, alors le fluide d'injection préparé à partir du mélange peut être injecté moins de 1 heure, voire moins de 15 minutes après le début du mélange entre la suspension polyphasique et l'eau ou la saumure. Ce délai court est particulièrement avantageux pour optimiser les flux de matières dans ces opérations de récupération assistée du pétrole souvent complexes.

Dans un mode de réalisation préféré, le mélange entre la suspension polyphasique et l'eau ou la saumure est fait en partie dans un mixeur statique ou dynamique, ou dans une cuve agitée, ou dans un appareil de dispersion de suspension particulaire de polymère.

Dans un mode de réalisation préféré, la suspension polyphasique est mélangée avec de l'eau ou une saumure contenant moins de sels que la suspension polyphasique pour donner une composition intermédiaire, ladite composition intermédiaire étant ensuite mélangée avec de l'eau ou une saumure contenant moins de sels que la suspension polyphasique pour donner le fluide d'injection.

Dans un mode de réalisation préféré, la suspension polyphasique est ajoutée en ligne dans un conduit transportant de l'eau ou une saumure formant un fluide d'injection, ledit fluide d'injection étant pompé directement dans le réservoir, sans étape de mélange autre que les turbulences dans le conduit.

De manière générale, le fluide d'injection contient avant son injection entre 20 ppm et 5000 ppm en poids d'un ou plusieurs copolymères hydrosolubles tels que décrits précédemment, préférentiellement entre 300 ppm et 4000 ppm.

Les techniques SP (Surfactant Polymer) et ASP (Alkaline Surfactant Polymer) bien connues de l'homme du métier pourront être mises en œuvre avec le même principe selon l'invention. De même, les polymères viscosifiant du fluide d'injection pourront être protégés selon les techniques décrites dans le document WO2010/133258.

De manière avantageuse, le fluide d'injection, présente au moment de son injection, une viscosité comprise entre 1 et 200 cps (centipoises), (mesures de viscosité à 20°C avec un viscosimètre Brookfield avec un module UL et à une vitesse de 6 tours par minute).

Dans le cadre de l'invention, le fluide d'injection est ensuite injecté dans un gisement de pétrole c'est-à-dire dans un réservoir (ou formation souterraine), selon toute technique connue de l'homme du métier dans les procédés de récupération assistée du pétrole également nommés « RAP » ou « EOR ». Sa préparation est réalisée sur site, juste en amont de son injection dans le gisement. En général, tous les composants introduits dans l'eau ou la saumure pour constituer le fluide d'injection sont, le plus souvent additionnés sur une ligne de circulation de la solution aqueuse ou de la saumure.

La suspension selon l'invention peut être utilisée dans tous les domaines dans lesquels des polymères hydrosolubles de haut poids moléculaires sont utilisés comme par exemple les opérations de forage, la fracturation hydraulique et le traitement des effluents miniers, mais aussi le traitement de l'eau, la fabrication du papier et le domaine de la construction.

La suspension selon l'invention trouve un intérêt particulier dans différents domaines comme les opérations de forage, la fracturation hydraulique et le traitement des effluents miniers. En effet, un des grands avantages de la forme de polymère selon l'invention est de pouvoir être préparée rapidement et facilement, et ce avec une forme concentrée en polymère hydrosoluble facilement transportable.

En conséquence, les procédés sus-décrits selon l'invention sont plus simples car ils n'utilisent pas un équipement lourd pour mettre en œuvre la forme dans laquelle le polymère est livré. Ils sont plus rapides, moins consommateurs d'espace et ils permettent de minimiser le temps de préparation des solutions de polymères. Ces avantages sont précieux dans ces industries.

Ainsi, la présente invention concerne également l'utilisation de la suspension polyphasique selon l'invention dans une opération de forage. Plus précisément, l'invention concerne également l'utilisation de la suspension polyphasique selon l'invention pour préparer une composition d'un fluide aqueux de forage, communément appelé "Boue de forage", utilisé pour forer un puits souterrain, un tunnel, une tranchée ou un pieu. Il peut s'agir de forages verticaux (VDD pour Vertical Directional Driling) ou horizontaux (HDD pour Horizontal Directional Drilling). Les industries du génie civil et de la récupération de pétrole et de gaz sont particulièrement concernées par ces forages.

La suspension selon l'invention peut être employée seule comme constituant principal de la boue de forage ou comme additif dans une boue de forage existante formulée avec au moins une autre matière active telle que : de la bentonite, de la sépiolite, de l'attapulgite, des tensio-actifs, de l'eau ou un polymère.

Les spécialistes sont généralement d'accord sur le fait qu'un système rotatif constitue une forme correcte de forage d'un pieux, d'un puits de pétrole ou de gaz. Ce système est basé sur la rotation d'un train de tiges de forage à la base duquel sont attachés un trépan de forage à pointes multiples, un bucket ou une vis notamment du type vis sans fin. Le trépan, la vis ou le bucket fore la roche en entraînant l'accumulation de débris à mesure que le forage progresse.

Il en résulte qu'un liquide de forage doit être utilisé entre autres pour ramener ces débris à la surface en vue de leur élimination, de manière à ce que le trépan puisse continuer à fonctionner et à ce que le trou de forage puisse être maintenu propre et exempt de débris à tout moment.

Le liquide « boue » de forage doit également assurer la stabilité du trou de forage durant l'avancement du forage mais également pendant les phases d'arrêt en assurant le maintien en suspension des débris ou « cuttings ».

Le liquide "boue" de forage doit également permettre d'inhiber le gonflement des argiles et éviter ainsi le blocage du trépan.

Dans le cadre de l'utilisation pour tunnelier la suspension selon l'invention permet de régler la viscosité des boues d'excavation et de gérer avec grande précision la pression dans la chambre d'excavation.

Des dispositifs de forage autres que le dispositif rotatif, tel que la benne, l'hydro-fraise sont parfois utilisés au cours d'opérations de forage. Néanmoins, ces dispositifs nécessitent toujours la présence d'un fluide de forage, ou "boue de forage", pour éliminer les débris du trou foré ou pour assumer autrement des fonctions en relation avec des fluides de forage.

La suspension selon l'invention est particulièrement avantageuse comme ingrédient d'une composition d'un liquide aqueux de forage tant au niveau de la facilité de mise en œuvre que dans les performances applicatives obtenues.

La suspension selon l'invention permet l'utilisation, avec une grande facilité de mise en œuvre, de polymères de haut poids moléculaire et l'obtention d'une viscosité plus élevée à dosage équivalent.

La suspension selon l'invention se montre particulièrement efficace lorsque l'opération de forage s'effectue dans des sols pollués, notamment par la présence de cations divalents, d'eau à forte salinité, de pollution ciment ou de tout autre contaminant apportant un excès d'électrolyte(s) responsable de la destruction de la viscosité par neutralisation du polymère.

La présente invention concerne également l'utilisation de la suspension polyphasique selon l'invention dans une opération de fracturation hydraulique, notamment de réservoirs d'huile et de gaz non conventionnels. Le document WO2013/150203 décrit cette technologie et une composition polymérique particulièrement avantageuse.

La production d'huile et de gaz contenus dans des réservoirs non conventionnels se développe depuis plusieurs années et nécessite d'ouvrir des fractures dans le réservoir pour une production économique du pétrole et du gaz. La fracturation hydraulique a pour but de créer une perméabilité supplémentaire et d'engendrer des surfaces de production de gaz ou de pétrole plus importantes. En effet, la faible perméabilité, les barrières naturelles de couches compactes, l'imperméabilisation par les opérations de forage limitent fortement la production. Lc gaz ou l'huile contcnu(c) dans 1c réservoir non conventionnel, ne peut migrer facilement de la roche vers le puits sans la stimulation du réservoir par fracturation hydraulique.

Ces opérations consistent à injecter de l'eau à haute pression et à très fort débit de manière à créer des fractures réparties perpendiculairement aux puits de production. On procède généralement en plusieurs étapes afin de créer des fractures sur toute la longueur du puits horizontal, ce qui permet de couvrir un volume maximal du réservoir. Afin de garder ces fractures ouvertes, on ajoute un agent de soutènement (du sable, des matières plastiques ou des céramiques calibrées) de manière à empêcher la fermeture de ces fractures et de maintenir la capillarité créée une fois l'injection stoppée.

L'eau seule ne suffit pas à obtenir d'une part une bonne fracturation à des pressions élevées à cause des pertes de charges par friction, et d'autre part une bonne efficacité de placement de l'agent de soutènement du fait de sa faible viscosité. Ceci limite sa capacité à fracturer efficacement le réservoir et à maintenir en place l'agent de soutènement dans les fractures. Pour contrer ce problème, ont été développés des fluides de fracturation contenant des composés réducteurs de friction et viscosifiants, à base de polymères.

Parmi les composés viscosifiants de solutions aqueuses appartenant à l'état de la technique, les polymères synthétiques à base d'acrylamide sont particulièrement connus, et ceux modifiés par introduction de groupements hydrophobes sont particulièrement avantageux.

La suspension selon l'invention est particulièrement avantageuse tant au niveau de la facilité de mise en œuvre que dans les performances applicatives obtenues. On peut citer l'amélioration des propriétés de soutènement, et la réduction des pertes de charges.

La présente invention concerne également l'utilisation de la suspension polyphasique selon l'invention dans une opération de traitement d'effluents miniers. Le document WO2014/736624 décrit cette technologie et une composition polymérique particulièrement avantageuse.

Le traitement de ces résidus et d'autres matériaux de rebut est devenu un problème technique, environnemental et d'ordre public. L'utilisation de polymères synthétiques ou naturels, tels que des coagulants et des floculants, pour séparer les solides du liquide est une pratique courante.

La suspension selon l'invention est particulièrement avantageuse tant au niveau de la facilité de mise en œuvre que dans les performances applicatives obtenues. On peut citer par exemple l'amélioration de la séparation solide liquide et l'augmentation de la clarté de l'eau extraite.

L'utilisation de la suspension polyphasique selon l'invention présente un avantage dans une technique particulière de traitement des effluents miniers. Celle-ci consiste à combiner un floculant ou un coagulant à un effluent minier, puis à décharger cet effluent traité de manière subaquatique.

Plus précisément, un effluent minier est transporté vers une zone de décharge consistant en une zone aquatique telle un étang ou un lac. Lors de son transport, l'effluent minier est traité avec un floculant ou un coagulant. L'effluent ainsi traité est déchargé dans la zone aquatique, à proximité du niveau de l'eau ou sous le niveau de l'eau de telle sorte que l'effluent traité coule et tombe dans la zone aquatique dans laquelle la partie solide sédimente au fond, et la partie aqueuse se retrouve dans l'eau de la zone aquatique. En d'autres termes, si l'effluent est transporté dans une tuyauterie, la sortie du tuyau par laquelle sort l'effluent traité est positionnée à proximité de la zone aquatique, ou est immergée dans la zone aquatique. De manière préférée, l'effluent traité sort directement dans la zone aquatique, sous le niveau de l'eau. Dans ce cas, la profondeur d'immersion du tuyau est préférentiellement de 0,1 à 10 mètres.

Ainsi l'invention concerne également un procédé de traitement d'un effluent minier, comprenant les étapes suivantes :

- on combine la suspension selon l'invention ou une solution aqueuse préparée à partir de ladite suspension, à un effluent minier ;
- on décharge l'effluent ainsi traité dans une zone aquatique, à proximité du niveau de l'eau ou sous le niveau de l'eau de telle sorte que l'effluent traité coule et tombe dans la zone aquatique dans laquelle la partie solide sédimente au fond, et la partie aqueuse se retrouve dans l'eau de la zone aquatique.

De manière tout à fait surprenante, l'utilisation de la suspension polyphasique selon l'invention dans ce procédé permet le traitement efficace d'effluent minier. La compaction lors de la sédimentation est améliorée et la qualité de l'eau également.

L'invention et les avantages qui en découlent ressortiront bien des exemples de réalisation suivants, et à l'appui des figures.

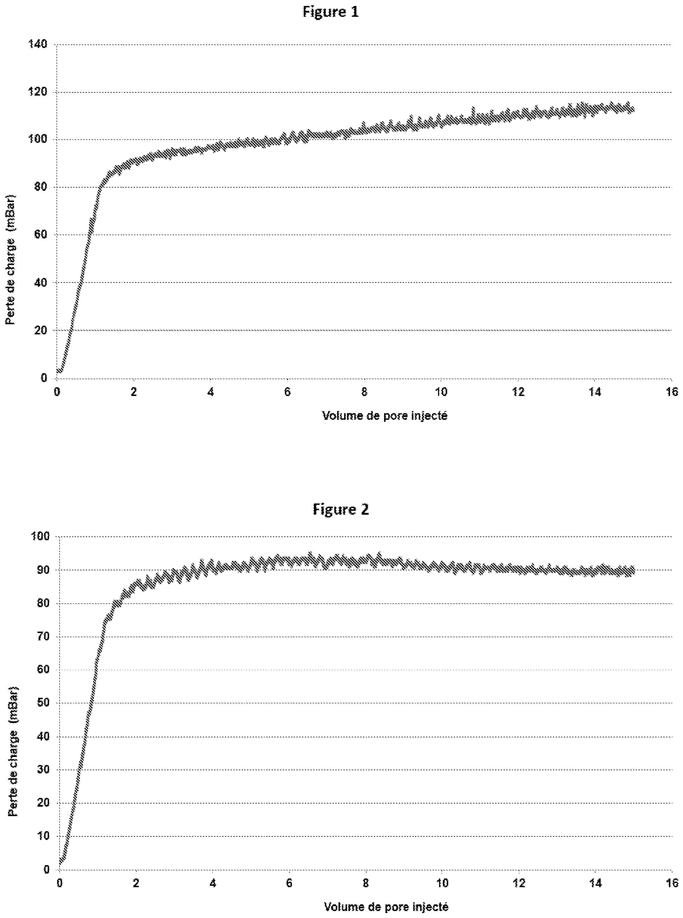

La figure 1 représente un graphique montrant l'évolution de la perte de charge en fonction de la quantité de fluide d'injection mesurée en volume équivalent au volume de pore, et ce pour un fluide d'injection A contenant 2000 ppm de polymère hydrosoluble, et préparé à partir d'une suspension de particules de terpolymère d'acrylamide, d'acide acrylique et d'ATBS de poids moléculaire de 12 millions de g/mol, mis en suspension dans une huile.

La figure 2 représente un graphique montrant l'évolution de la perte de charge en fonction de la quantité de fluide d'injection mesuré en volume équivalent au volume de pore, et ce pour un fluide d'injection B contenant 2000 ppm de polymère hydrosoluble et préparé à partir d'une suspension polyphasique particulaire selon l'invention et dans laquelle le polymère hydrosoluble est un terpolymère d'acrylamide, d'acide acrylique et d'ATBS de poids moléculaire de 12 millions de g/mol.

**EXEMPLES**

L'injection de polymère en milieu poreux est un bon moyen pour s'assurer de la bonne propagation des molécules au sein du réservoir avec un minimum de dommages. L'injectivité est évaluée à travers la mesure de pertes de charges continuellement enregistrées via des capteurs de pression placés de part et d'autre du système.

Une bonne propagation se traduit généralement par une stabilisation rapide des pertes de charge au cours du temps. Inversement, une montée continue de pression est la preuve d'un bouchage progressif du milieu poreux pouvant causer des dommages irréversibles au réservoir et l'impossibilité de continuer l'injection, conduisant à l'arrêt du processus de récupération assistée d'huile.

L'injection des fluides d'injection a été menée avec des roches de type Bentheimer saturées en eau.

La procédure utilisée est décrite ci-dessous :

- Préparation de l'échantillon de roche Bentheimer (9 cm de long, 2,4 cm de diamètre). L'échantillon est mis à sécher en étuve à 50°C pendant une nuit puis le poids scc est mesuré ;
- Saturation de l'échantillon de roche avec une eau de mer synthétique, contenant 30 000 ppm de NaCl et 3000 ppm de $CaCl_2$, au moyen d'une pompe à vide. Le poids humide est enregistré et le volume poreux déduit ;
- L'échantillon de roche est mis en place dans un manchon au sein d'une cellule étanche de type Hassler à température ambiante. Une contre pression de 30 bar est appliquée dans la cellule pour contraindre la roche dans le manchon ;
- Différents débits de saumure sont appliqués au moyen d'une pompe et les pertes de charge au sein du milieu poreux sont relevées. La perméabilité de la roche est calculée au moyen de la loi de Darcy ;

$$Q = \frac{K\,(P1 - P2)\,A}{\mu\,L}$$

Q est le débit ($cm^3$/s)
K est la perméabilité (Darcy)
(P1-P2) est la perte de charge au sein de l'échantillon avec : (atm/cm)
A représente la section de l'échantillon de roche ($cm^2$)
$\mu$ est la viscosité du fluide injectée (centipoise)
L est la longueur de l'échantillon de roche (cm)

- Ensuite, l'injection du fluide d'injection est menée sur plusieurs volumes poreux (15) à une concentration de 2000 ppm. Un volume poreux correspond au volume de vide au sein de la roche, calculé en soustrayant le poids sec au poids humide de la roche.

La perte de charge est continuellement enregistrée. Il en résulte un graphique avec en ordonnées les pertes de charge en mbar et en abscisse le nombre de volumes poreux injectés. Les injections sont réalisées à 25°C.

Dans les deux cas suivants, la taille moyenne de particules du polymère hydrosoluble est de 160 $\mu$m.

Dans un contre-exemple, un fluide d'injection A est préparé à partir d'un mélange de particules de terpolymère d'acrylamide, d'acide acrylique et d'ATBS de poids moléculaire de 12 millions g/mol, mis en suspension dans une huile additionnée de bentonite, ladite suspension comprenant 30 % en poids de polymère et 66 % de solvant organique (Exxsol D100), et 4 % en poids de bentonite.

Le profil d'injection du fluide d'injection A montre une augmentation constante de la perte dc charge. Cette augmentation démontre la mauvaise propagation du fluide d'injection A qui bouche progressivement la roche. Appliqué dans un champ de pétrole, cela peut causer des dommages irréversibles et conduire à une perte totale d'injectivité.

Dans un exemple selon l'invention, un fluide d'injection B est préparé à partir d'une suspension polyphasique particulaire selon l'invention de particules de terpolymère d'acrylamide, d'acide acrylique et d'ATBS de poids moléculaire de 12 millions g/mol, ladite suspension comprenant (en poids) : 36 % de terpolymère, 25 % de $CaCl_2$, 18 % de $CaBr_2$, et 0,05 % d'hydroxyéthyl cellulose.

Le profil d'injection du fluide d'injection B montre une stabilisation de la perte de charge après l'injection d'un volume de fluide équivalent à 3 volumes de pore. La perte de charge reste ensuite stable lors de l'injection, démontrant une très bonne propagation du fluide d'injection B.

La suspension polyphasique selon l'invention a l'avantage d'être stable durant plus de 6 mois. Elle ne contient aucun solvant ou tensioactif pouvant être préjudiciable lors de l'injection. Elle se prépare rapidement et sans nécessité d'appareil complexe de mise en solution.

L'utilisation de cette suspension polyphasique particulaire dans un procédé de récupération assistée du pétrole permet de simplifier l'étape de préparation du fluide d'injection et permet d'obtenir d'excellents résultats en termes d'injectivité.

**Revendications**

1. Suspension polyphasique particulaire aqueuse comprenant :

   - 15 à 60 % en poids d'au moins un polymère hydrosoluble sous forme de particule solide de taille moyenne comprise entre 5 et 500 $\mu$m ;
   - 15 à 45 % en poids d'au moins un sel de métal alcalin et/ou d'au moins un sel d'un métal alcalino-terreux ;
   - au moins un agent viscosifiant différent du polymère hydrosoluble ;
   - au moins 10 % en poids d'eau ; et

   ladite suspension ayant une viscosité Brookfield comprise entre 500 et 20000 cps, et ladite suspension ayant une masse volumique comprise entre 1,1 et 2 kg/l, à 25°C et à une pression de 101 325 Pa,
   la viscosité Brookfield de la suspension étant mesurée à 20°C, avec un appareil Brookfield modèle LVT, monté d'un module LV,
   la taille moyenne des particules du polymère hydrosoluble étant mesurée par diffraction laser, avec un appareil de mesure laser, en milieu liquide ou sous forme solide.

2. Suspension polyphasique particulaire selon la revendication 1, *caractérisée* **en ce que** la suspension polyphasique particulaire contient moins de 1% en poids de solvant, et moins de 0,5% en poids de tensioactif.

3. Suspension polyphasique particulaire selon la revendication 1 ou 2, *caractérisée* **en ce que** la taille moyenne des particules de polymère hydrosoluble est comprise entre 10 $\mu$m et 400 $\mu$m, préférentiellement entre 50 $\mu$m et 200 $\mu$m.

4. Suspension polyphasique particulaire selon l'une des revendications précédentes, *caractérisée* **en ce que** le polymère hydrosoluble est un polymère anionique à base d'acrylamide, préférentiellement un copolymère d'acrylamide et d'acrylamido tertio butyl sulfonique acide (ATBS) optionnellement partiellement post-hydrolysé, plus préférentiellement un terpolymère d'acrylamide, d'acide acrylique et d'acrylamido tertio butyl sulfonique acide (ATBS), et **en ce que** le polymère hydrosoluble a un poids moléculaire compris entre 2 et 40 millions g/mol.

5. Suspension polyphasique particulaire selon l'une des revendications précédentes, *caractérisée* **en ce que** le sel de métal alcalino-terreux est le $CaCl_2$ ou le $CaBr_2$, ou un mélange de $CaCl_2$ et de $CaBr_2$, le cas échéant, le mélange de $CaCl_2$ et de $CaBr_2$ ayant un ratio préférentiellement compris entre 10:1 et 1:2, plus préférentiellement entre 8:1 et 2:1.

6. Suspension polyphasique particulaire selon l'une des revendications précédentes, *caractérisée* **en ce que** l'agent viscosifiant différent du polymère hydrosoluble est un dérivé de cellulose, préférentiellement de l'hydroxyéthyl cellulose.

7. Suspension polyphasique particulaire selon l'une des revendications précédentes, *caractérisée* **en ce que** la quantité d'agent viscosifiant, différent du polymère hydrosoluble, est comprise entre 0,01 et 5 %.

8. Suspension polyphasique particulaire selon l'une des revendications précédentes, *caractérisée* **en ce que** la masse volumique de la suspension est comprise entre 1,3 et 1,9 kg/l.

9. Procédé de récupération assistée du pétrole comprenant les étapes suivantes :

   - préparer un fluide d'injection en mélangeant une suspension polyphasique particulaire aqueuse selon l'une des revendications 1 à 8, avec de l'eau ou une saumure ;
   - injecter le fluide d'injection dans un réservoir ;
   - récupérer un mélange aqueux et huileux et/ou gazeux.

**10.** Procédé selon la revendication 9, *caractérisé* **en ce que** le mélange de la suspension et de l'eau ou de la saumure est effectué pendant moins de 1 heure, préférentiellement pendant moins de 10 minutes.

**11.** Procédé selon l'une des revendications 9 à 10, *caractérisé* **en ce que** la suspension polyphasique est mélangée avec de l'eau ou une saumure contenant moins de sels que la suspension polyphasique pour donner une composition intermédiaire, ladite composition intermédiaire étant ensuite mélangée avec de l'eau ou une saumure contenant moins de sels que la suspension polyphasique pour donner le fluide d'injection.

**12.** Procédé selon l'une des revendications 9 à 11, *caractérisé* **en ce que** la suspension polyphasique est ajoutée en ligne dans un conduit transportant de l'eau ou une saumure formant un fluide d'injection, ledit fluide d'injection étant injecté directement dans le réservoir, sans étape de mélange autre que les turbulences dans le conduit.

**13.** Procédé selon l'une des revendications 9 à 11, *caractérisé* **en ce que** le mélange entre la suspension polyphasique et l'eau ou la saumure est fait en partie dans un mixeur statique ou dynamique, ou dans une cuve agitée, ou dans un appareil de dispersion de suspension particulaire de polymère.

**14.** Utilisation de la suspension polyphasique selon l'une des revendications 1 à 8 dans une opération de forage ou dans une opération de fracturation hydraulique ou dans une opération de traitement d'effluent minier.

**15.** Procédé de traitement d'un effluent minier, comprenant les étapes suivantes :

    - on combine la suspension selon l'une des revendications 1 à 8, ou une solution aqueuse préparée à partir de ladite suspension, à un effluent minier ;
    - on décharge l'effluent ainsi traité dans une zone aquatique, à proximité du niveau de l'eau ou sous le niveau de l'eau de telle sorte que l'effluent traité coule et tombe dans la zone aquatique dans laquelle la partie solide sédimente au fond, et la partie aqueuse se retrouve dans l'eau de la zone aquatique.

**Patentansprüche**

**1.** Wässrige polyphasige Partikelsuspension, die enthält:

    - 15 bis 60 Gewichts-% mindestens eines wasserlöslichen Polymers in Form fester Partikel mit einer Durchschnittsgröße zwischen 5µ und 500 µm;
    - 15 bis 45 Gewichts-% mindestens eines Alkalisalzes und/ oder mindestens eines Erdalkalimetallsalze s;
    - mindestens ein Verdickungsmittel, das sich vom wasserlöslichen Polymer unterscheidet;
    - mindestens 10 Gewichts-% Wasser; und

        diese Suspension hat dabei eine Brookfield- Viskosität zwischen 500 und 20000 cps, und
        diese Suspension hat eine Dichte zwischen 1,1 und 2 kg/l, bei 25°C und einem Druck von 101 325 Pa,
        die Brookfield- Viskosität der Suspension wird bei 20°C, mit einem Brookfield-Gerät, Modell LVT, ausgerüstet mit einem LV - Modul, gemessen,
        Die Durchschnittsgröße der Partikel des wasserlöslichen Polymers wird durch Laserbeugung gemessen, mit einem Lasermessgerät in wässrigem Milieu oder in fester Form.

**2.** Polyphasige Partikelsuspension nach Anspruch 1, *dadurch gekennzeichnet, dass* die polyphasige Partikelsuspension weniger als 1 Gewichts-% Lösungsmittel enthält, und weniger als 0,5 Gewichts-% Tenside.

**3.** Polyphasige Partikelsuspension nach Anspruch 1 oder 2, *dadurch gekennzeichnet, dass* die Durchschnittsgröße der Partikel des wasserlöslichen Polymers zwischen 10 µm und 400 µm beträgt, vorzugsweise zwischen 50 µm und 200 µm.

**4.** Polyphasige Partikelsuspension nach einem der vorangehenden Ansprüche, *dadurch gekennzeichnet, dass* es sich bei dem wasserlöslichen Polymer um ein anionisches Polymer auf Acrylamidbasis handelt, vorzugsweise ein Copolymer aus Acrylamid und 2-Acrylamido-tert-butylsulfonsäure (ATBS), optional teilweise post- hydrolysiert, besser noch ein Terpolymer aus Acrylamid, Acrylsäure und 2-Acrylamido-tert-butylsulfonsäure (ATBS), und dadurch, dass das wasserlösliche Polymer ein Molekulargewicht zwischen 2 und 40 Millionen g/mol hat.

**5.** Polyphasige Partikelsuspension nach einem der vorangehenden Ansprüche, *dadurch gekennzeichnet, dass* es sich bei dem Erdalkalimetallsalz um $CaCl_2$, oder $CaBr_2$, oder einer Mischung aus $CaCl_2$ und $CaBr_2$ handelt, gegebenenfalls hat die Mischung aus $CaCl_2$ und $CaBr_2$ ein Verhältnis zwischen vorzugsweise 10:1 und 1:2, noch besser zwischen 8:1 und 2:1.

**6.** Polyphasige Partikelsuspension nach einem der vorangehenden Ansprüche, ***dadurch gekennzeichnet, dass*** das Verdickungsmittel, das sich von dem wasserlöslichen Polymer unterscheidet, ein Cellulose- Derivat, ist, vorzugsweise Hydroxyethyl-Cellulose.

**7.** Polyphasige Partikelsuspension nach einem der vorangehenden Ansprüche, ***dadurch gekennzeichnet, dass*** das Verdickungsmittel, das sich von dem wasserlöslichen Polymer unterscheidet, zwischen 0,01 und 5 % liegt.

**8.** Polyphasige Partikelsuspension nach einem der vorangehenden Ansprüche, ***dadurch gekennzeichnet, dass*** die Dichte der Suspension zwischen 1,3 und 1,9 kg/1 liegt.

**9.** Verfahren der erhöhten Ölausbeute, das die folgenden Schritte umfasst:

- Vorbereitung einer Einspritzflüssigkeit durch Mischen einer wässrigen polyphasigen Partikelsuspension nach einem der Ansprüche 1 bis 8, mit Wasser oder einer Salzlake;
- Einspritzen der Einspritzflüssigkeit in eine Lagerstätte;
- Auffangen einer wässrigen und öligen und/oder gashaltigen Lösung.

**10.** Verfahren nach Anspruch 9, ***dadurch gekennzeichnet, dass*** die Mischung der Suspension mit Wasser oder Salzlake in weniger als 1 Stunde, vorzugsweise in weniger als 10 Minuten durchgeführt wird.

**11.** Verfahren nach einem der Ansprüche 9 bis 10, ***dadurch gekennzeichnet, dass*** die polyphasige Suspension mit Wasser oder Salzlake vermischt wird, die einen geringeren Salzgehalt hat, als die polyphasige Suspension, diese Zwischenlösung wird dann mit Wasser oder Salzlake vermischt die einen geringeren Salzgehalt hat, als die polyphasige Suspension um die Einspritzflüssigkeit zu ergeben.

**12.** Verfahren nach einem der Ansprüche 9 bis 11, ***dadurch gekennzeichnet, dass*** die polyphasige Suspension kontinuierlich in eine Leitung eingespeist wird, die Wasser oder eine Salzlake transportiert, die eine Einspritzlösung bilden, diese Einspritzlösung wird direkt in den Behälter eingespritzt, ohne einen Mischungsschritt, außer den Turbulenzen in der Leitung.

**13.** Verfahren nach einem der Ansprüche 9 bis 11, ***dadurch gekennzeichnet, dass*** die Mischung aus der polyphasigen Suspension und Wasser oder Salzlake zum Teil in einem statischen oder dynamischen Mischer oder in einem Rührwerksbehälter oder in einem Dispersionsgerät der Polymer- Partikelsuspension erfolgt.

**14.** Einsatz der polyphasigen Suspension nach einem der Ansprüche 1 bis 8 bei einer Bohroperation oder einer hydraulischen Frakturierungsoperation oder bei der Behandlung von Grubenwasser.

**15.** Verfahren zur Behandlung von Grubenwasser, das die folgenden Schritte enthält:

- die Suspension nach einem der Ansprüche 1 bis 8, oder eine wässrige Lösung, die ausgehend von dieser Suspension hergestellt wurden, wird mit Grubenwasser kombiniert;
- das so behandelte Abwasser wird in einer Wasserfläche nahe am Wasserpegel oder unter dem Wasserpegel entsorgt, so dass das behandelte Abwasser in die Wasserfläche fließt oder stürzt, in der sich der feste Anteil auf dem Boden absetzt und der wässrige Anteil sich in der Wasserfläche findet.

**Claims**

**1.** An aqueous particulate multiphase suspension comprising:

- 15 to 60% by weight of at least one water-soluble polymer in the form of solid particles with average size comprised between 5 and 500 $\mu$m;
- 15 to 45% by weight of at least one alkali metal salt and/or of at least one alkaline earth metal salt;
- at least one viscosifying agent other than the water-soluble polymer;
- at least 10% by weight of water; and

said suspension having a Brookfield viscosity comprised between 500 and 20,000 cps, and

said suspension having a density comprised between 1.1 and 2 kg/1, at 25°C and at a pressure of 101,325 Pa,

the Brookfield viscosity of the suspension being measured at 20°C, with a Brookfield device LVT model, mounted with an LV spindle,

the average size of the water-soluble polymer particles being measured by laser diffraction, with a laser measuring device, in liquid medium or in solid form.

**2.** The particulate multiphase suspension according to claim 1, *characterized* **in that** the particulate multiphase suspension contains less than 1% by weight of solvent, and less than 0.5% by weight of surfactant.

3. The multiphase particulate suspension according to claim 1 or 2, *characterized* **in that** the average size of the particles of water-soluble polymer is between 10 $\mu$m and 400 $\mu$m, preferably between 50 $\mu$m and 200 $\mu$m.

4. The multiphase particulate suspension according to one of the preceding claims, *characterized* **in that** the water-soluble polymer is an acrylamide-based anionic polymer, preferably a copolymer of acrylamide and acrylamide tertiary butyl sulfonic acid (ATBS) optionally partially post-hydrolyzed, more preferably a terpolymer of acrylamide, acrylic acid and acrylamide tertiary butyl sulfonic acid (ATBS),
and **in that** the water-soluble polymer has a molecular weight of between 2 and 40 million g/mol.

5. The multiphase particulate suspension according to one of the preceding claims, *characterized* **in that** the alkaline earth metal salt is $CaCl_2$ or $CaBr_2$, or a mixture of $CaCl_2$ and $CaBr_2$,
wherein the mixture of $CaCl_2$ and $CaBr_2$ has a ratio preferably between 10:1 and 1:2, more preferably between 8:1 and 2:1.

6. The multiphase particulate suspension according to one of the preceding claims, *characterized* **in that** the viscosifying agent other than the water-soluble polymer is a cellulose derivative, preferably hydroxyethyl cellulose.

7. The multiphase particulate suspension according to one of the preceding claims, *characterized* **in that** the quantity of viscosifying agent other than the water-soluble polymer is between 0.01 and 5%.

8. The multiphase particulate suspension according to one of the preceding claims, *characterized* **in that** the density of the suspension is between 1.3 and 1.9 kg/1.

9. Process for enhanced oil recovery comprising the following steps:

    - preparing an injection fluid by mixing an aqueous particulate multiphase suspension according to one of claims 1 to 8, with water or a brine;
    - injecting the injection fluid into a reservoir;
    - recovering an aqueous and oily and/or gaseous mixture.

10. Process according to claim 9, *characterized* **in that** the mixing of the suspension and the water or brine is done for less than 1 hour, preferably for less than 10 minutes.

11. Process according to one of claims 9 to 10, *characterized* **in that** the multiphase suspension is mixed with water or a brine containing fewer salts than the multiphase suspension to yield an intermediate composition, said intermediate composition next being mixed with water or a brine containing fewer salts than the multiphase suspension to yield the injection fluid.

12. Process according to one of claims 9 to 11, *characterized* **in that** the multiphase suspension is added on-line in a pipe transporting water or a brine forming an injection fluid, said injection fluid being injected directly into the reservoir, with no mixing step other than the turbulences in the pipe.

13. Process according to one of claims 9 to 11, *characterized* **in that** the mixing between the multiphase suspension and the water or brine is done partially in a static or dynamic mixer, or in an agitated tank, or in a dispersion device for particulate polymer suspension.

14. Use of the multiphase suspension according to one of claims 1 to 8 in a drilling operation or in a hydraulic fracturing operation or in a mining effluent treatment operation.

15. Process for treating a mining effluent, comprising the following steps:

    - combining the suspension according to one of claims 1 to 8, or an aqueous solution prepared from said suspension, with a mining effluent;
    - discharging the effluent thus treated into an aquatic zone, near the water level or below the water level, such that the treated effluent flows and falls into the aquatic zone in which the solid part settles at the bottom and the aqueous part is in the water of the aquatic zone.

## Figure 1

## Figure 2

## RÉFÉRENCES CITÉES DANS LA DESCRIPTION

**Documents brevets cités dans la description**

- WO 2009047480 A
- WO 2016051777 A
- WO 2011100665 A
- US 20050239957 A
- WO 2014075964 A
- US 2017218259 A
- WO 2016069937 A
- WO 2005100423 A
- WO 201315003 A
- WO 2010133258 A
- WO 2013150203 A
- WO 2014736624 A

**Littérature non-brevet citée dans la description**

- Oil & gas science and technology. *revue TFP,* 2008, vol. 63 (1), 9-19
- Oil-in-Water Emulsions and Their Flow Properties in Porous Media. *SPE 4369*
- Flow of oil-in Water Emulsions Through Tubes and Porous Media. *SPE 5859*